# EUROPEAN PATENT APPLICATION

(11) **EP 3 333 928 A1**
(43) Date of publication of application: **13.06.2018**
(21) Application number: 17810486.5
(22) Date of filing: 22.05.2017
(51) Int. Cl.: H01M 2/02, H01M 10/04

(54) **SECONDARY BATTERY**

(30) Priority: 09.06.2016 KR 20160071640
(71) Applicant: LG Chem, Ltd., Seoul 07336 (KR)
(72) Inventor: LEE, Jung Pil, Daejeon 34122 (KR); CHO, Sung Ju, Daejeon 34122 (KR)
(74) Representative: Cabinet Plasseraud
(86) International application number: PCT/KR2017/005285
(87) International publication number: WO 2017/213363

(57) **Abstract**

The present invention relates to a secondary battery comprising: an electrode assembly; and a case in which the electrode assembly is accommodated, wherein the case comprises a thermal contractible protection layer that is contracted by heat.

## Description

### CROSS-REFERENCE TO RELATED APPLICATION

The present application claims the benefit of the priority of Korean Patent Application No. 10-2016-0071640, filed on June 09, 2016, which is hereby incorporated by reference in its entirety.

### TECHNICAL FIELD

The present invention relates to a secondary battery, and more particularly, to a secondary battery that effectively suppresses swelling of an electrode assembly.

### BACKGROUND ART

In general, secondary batteries refer to chargeable and dischargeable batteries, unlike primary batteries that are not chargeable. Such a secondary battery is being widely used in the high-tech electronic fields such as mobile phones, notebook computers, and camcorders.

Such a secondary battery comprises an electrode assembly and a case in which the electrode assembly is accommodated. The electrode assembly has a structure in which a plurality of electrodes and a plurality of separators are alternately stacked on each other.

To improve performance of the above-described secondary battery, a charging/discharging process is performed. Here, the electrode assembly may be swelled to cause deformation of the electrode assembly. In addition, the secondary battery is expanded in outer appearance due to the swelling of the electrode assembly to cause product defects.

### DISCLOSURE OF THE INVENTION

### TECHNICAL PROBLEM

The present invention has been made to solve the abovementioned problem, and an object of the prevent invention is to provide a secondary battery that effectively suppresses swelling of an electrode assembly through a case and prevents an outer appearance of the secondary battery from being expanded and thereby prevent product defects from occurring.

### TECHNICAL SOLUTION

To achieve the abovementioned object, a secondary battery according to the present invention comprises: an electrode assembly; and a case in which the electrode assembly is accommodated, wherein the case comprises a thermal contractible protection layer that is contracted by heat.

The case may have a structure in which a metal layer, an outer adhesion layer, and the thermal contractible protection layer are sequentially stacked.

The thermal contractible protection layer may be disposed on the outermost side of the case.

The thermal contractible protection layer may be attached to the outermost side of the case.

The thermal contractible protection layer may be stacked on the outermost side of the case.

The thermal contractible protection layer may be disposed on the innermost side of the case.

The thermal contractible protection layer may be made of an insulative material.

The thermal contractible protection layer may be provided as a biaxial oriented film.

The thermal contractible protection layer may be made of one of nylon, polypropylene, polyester, polyamide, and polystyrene.

The thermal contractible protection layer may be made of a material having no thermosetting property.

A sealing layer and an inner adhesion layer may be further stacked on an inner surface of the case.

The case may have a structure in which the sealing layer, the inner adhesion layer, the metal layer, the outer adhesion layer, and the thermal contractible protection layer are sequentially stacked outward from the inside thereof.

The thermal contractible protection layer may be disposed over on an entire circumference of the case.

### ADVANTAGEOUS EFFECTS

The present invention has effects as follows.
First: the secondary battery according to the present invention may be provided with the case comprising the thermal contractible protection layer to effectively suppress the swelling of the electrode assembly, thereby preventing the electrode assembly and the secondary battery from being deformed.
Second: in the secondary battery according to the present invention, the case may be provided with the metal layer, an outer adhesion layer, and the thermal contractible protection layer to effectively suppress the swelling of the electrode assembly while maintaining the insulation property of the case.
Third: in the secondary battery according to the present invention, the thermal contractible protection layer may be provided as the biaxial oriented film to remarkably prevent the electrode assembly from being deformed.
Fourth: in the secondary battery according to the present invention, the thermal contractible protection layer may be made of the insulative material to prevent the short circuit with the outside from occurring due to the thermal contractible protection layer.
Fifth: in the secondary battery according to the present invention, the thermal contractible protection layer may be made of the material having no thermosetting property. Thus, when the thermal contractible protection layer decreases in temperature, the case may return to its original state to achieve the continuity in use.
Sixth: in the secondary battery according to the present invention, the case may further comprise the sealing layer and the inner adhesion layer to improve the sealability of the case.

### BRIEF DESCRIPTION OF THE DRAWINGS

FIG. 1 is a cross-sectional view of a secondary battery according to an embodiment of the present invention.

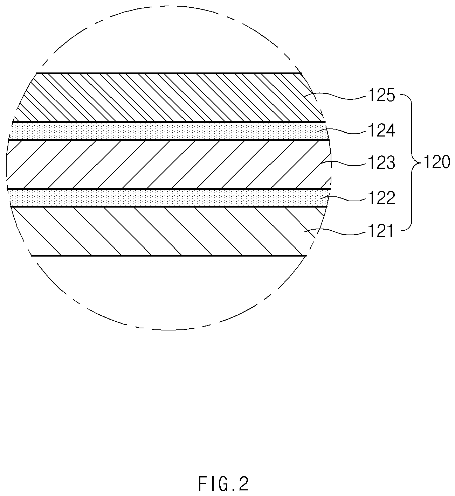

FIG. 2 is an enlarged view of a portion 'A' illustrated in FIG. 1.

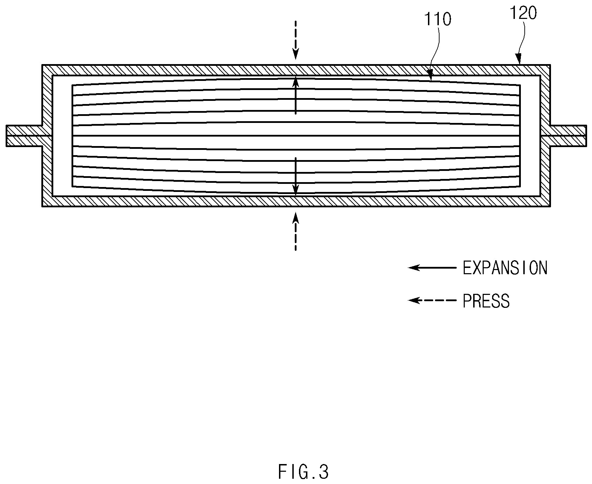

FIG. 3 is a cross-sectional view illustrating a pressed state of the secondary battery according to an embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

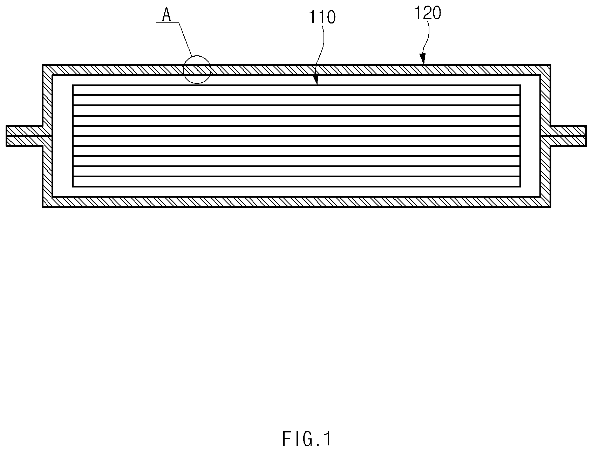

As illustrated in FIG. 1, a secondary battery according to an embodiment of the present invention comprises an electrode assembly 110 and a case 120 in which the electrode assembly 110 is accommodated.

The electrode assembly 110 is manufactured by alternately stacking a plurality of electrodes and a plurality of separators in a vertical direction. The plurality of electrodes may be provided with a first electrode and a second electrode, and the plurality of separators may be provided with a first separator and a second separator.

That is, the electrode assembly may be provided as a radical unit in which the first electrode, the first separator, the second electrode, and the second separator are sequentially stacked in the vertical direction or a unit stack part in which two or more radical units are stacked.

The case 120 has a pouch shape to accommodate the electrode assembly 110 therein.

To improve performance of the secondary battery, a charging/discharging process is performed. Here, when the electrode assembly 110 is charged and discharged, heat is generated due to cell resistance, and simultaneously, the secondary battery 110 is swelled due to lithium insertion into the negative electrode, extraction of the negative electrode, and an increase of an interface of the electrode assembly and thus is deformed. Particularly, deterioration in cell performance and expansion in outer appearance of the secondary battery occur by the extraction of the electrode or the increasing interface due to the repeated charging and discharging to cause product defects.

To solve the abovementioned problem, the secondary battery according to an embodiment of the present invention comprises the case 120 comprising the thermal contractible protection layer 125 that effectively suppresses the swelling of the electrode assembly 110 when changed and discharged.

That is, the case 120 comprises the thermal contractible protection layer 125, and the thermal contractible protection layer 125 may effectively press the electrode assembly 110 while being contracted by heat generated in the electrode assembly 110 when charged and discharged to effectively suppress the swelling of the electrode assembly 110 and also prevent the electrode assembly 110 and the secondary battery from being deformed. Particularly, the thermal contractible protection layer may absorb the heat generated when charged and discharged to improve the swelling of the cell and reduce a temperature of the cell, thereby preventing the cell from decreasing in lifespan of the cell due to the increase of the temperature and improving stability. Here, the case 120 has a structure in which a metal layer 123, an outer adhesion layer 124, and the thermal contractible protection layer 125 are sequentially stacked.

Here, the case 120 may improve strength of the case 120 through the metal layer 123, suppress the swelling of the electrode assembly 110 through the thermal contractible protection layer 125, and improve coupling between the metal layer 123 and the thermal contractible protection layer 125 through the outer adhesion layer 124.

The thermal contractible protection layer 125 may be disposed on the outermost side of the case 120. For example, the case 120 has the structure in which the metal layer 123, the outer adhesion layer 124, and the thermal contractible protection layer 125 are sequentially stacked outward from the inside thereof. Thus, the problem occurring due to the contact between the electrode assembly 110 and the thermal contractible protection layer 125, which are accommodated in the case 120, may be previously prevented to more stably contract the case 120.

Here, the thermal contractible protection layer 125 may be attached to the outermost side of the case 120 after the case 120 is manufactured. When the case 120 is manufactured, the thermal contractible protection layer 125 may be stacked to be disposed at the outside of the case 120. Thus, convenience and easiness in manufacture may be improved.

The thermal contractible protection layer 125 may be disposed inside the case 120. For example, the case 120 has a structure in which the thermal contractible protection layer 125, the outer adhesion layer 124, and the metal layer 123 are sequentially stacked outward from the inside thereof.

The thermal contractible protection layer 125 may be made of a material having an insulation property. That is, if the thermal contractible protection layer is made of a conductive material, other electrodes provided in the electrode assembly 110 may be connected to each other through the thermal contractible protection layer 125 to cause short circuit. To prevent this phenomenon from occurring, the thermal contractible protection layer 125 may be made of an insulative material to prevent other electrodes from being short-circuited with each other and also previously prevent the short circuit from occurring.

The thermal contractible protection layer 125 may be provided as a biaxial oriented film. That is, the biaxial oriented film is excellent in strength, thermal contraction, and transparency. Since the thermal contractible protection layer is provided as the biaxial oriented film, the expansion in volume of the electrode assembly 110 may be stably suppressed through pressing when charged and discharged to prevent the electrode assembly 110 from being deformed.

The thermal contractible protection layer 125 may be made of one material of nylon, polypropylene, polyester, polyamide, and polystyrene. The material does not usually press the electrode assembly 110, but effectively presses the electrode assembly 110 while being contracted by heat generated in the electrode assembly 110 when charged or discharged.

The thermal contractible protection layer 125 may be made of a material having no thermosetting property. That is, the thermal contractible protection layer 125 may be made of a material that is hardly hardened as heat is applied thereto. Thus, event through the thermal contractible protection layer 125 is contracted by the heat generated in the electrode assembly 110, the thermal contractible protection layer 125 may have flexibility to effectively press the electrode assembly. Particularly, in case of the material having no thermosetting property, when the thermal contractible protection layer 125 decreases in temperature, the thermal contractible protection layer 125 may return to its original shape. In this case, continuity in use may be achieved.

The thermal contractible protection layer 125 is disposed over the entire circumference of the case 120. That is, when the thermal contractible protection layer 125 is contracted, the entirety of the case 120 may be contracted at the same time to uniformly press the entirety of the electrode assembly 110.

A sealing layer 121 and an inner adhesion layer 122 may be further stacked on an inner surface of the case 120. That is, the case 120 may have a structure in which the sealing layer 121, the inner adhesion layer 122, the metal layer 123, the outer adhesion layer 124, and the thermal contractible protection layer 125 are sequentially stacked outward from the inside thereof. The sealability of the case 120 may be improved through the added sealing layer 121, and the coupling force between the sealing layer 121 and the metal layer 123 may be improved through the inner adhesion layer 122.

As described above, the secondary battery according to an embodiment of the present invention may comprise the case 120 comprising the thermal contractible protection layer 125 to effectively suppress the swelling of the electrode assembly 110 when charged and discharged, and particularly, prevent the electrode assembly 110 and the secondary battery from being deformed, thereby improving safety and marketability.

Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

## Claims

1. A secondary battery comprising:
an electrode assembly; and
a case in which the electrode assembly is accommodated,
wherein the case comprises a thermal contractible protection layer that is contracted by heat.

2. The secondary battery of claim 1, wherein the case has a structure in which a metal layer, an outer adhesion layer, and the thermal contractible protection layer are sequentially stacked.

3. The secondary battery of claim 1, wherein the thermal contractible protection layer is disposed on the outermost side of the case.

4. The secondary battery of claim 3, wherein the thermal contractible protection layer is attached to the outermost side of the case.

5. The secondary battery of claim 3, wherein the thermal contractible protection layer is stacked on the outermost side of the case.

6. The secondary battery of claim 1, wherein the thermal contractible protection layer is disposed on the innermost side of the case.

7. The secondary battery of claim 1, wherein the thermal contractible protection layer is made of an insulative material.

8. The secondary battery of claim 1, wherein the thermal contractible protection layer is provided as a biaxial oriented film.

9. The secondary battery of claim 1, wherein the thermal contractible protection layer is made of one of nylon, polypropylene, polyester, polyamide, and polystyrene.

10. The secondary battery of claim 1, wherein the thermal contractible protection layer is made of a material having no thermosetting property.

11. The secondary battery of claim 2, wherein a sealing layer and an inner adhesion layer are further stacked on an inner surface of the case.

12. The secondary battery of claim 11, wherein the case has a structure in which the sealing layer, the inner adhesion layer, the metal layer, the outer adhesion layer, and the thermal contractible protection layer are sequentially stacked outward from the inside thereof.

13. The secondary battery of claim 1, wherein the thermal contractible protection layer is disposed over on an entire circumference of the case.
